# EUROPEAN PATENT APPLICATION

(11) **EP 2 482 170 A2**
(43) Date of publication of application: **01.08.2012**
(21) Application number: 12153183.4
(22) Date of filing: 30.01.2012
(51) Int. Cl.: G06F 3/033, G06F 1/16

(54) **Terminal operative for display of electronic record**

(30) Priority: 31.01.2011 US 201113018113
(71) Applicant: Hand Held Products, Inc., Skaneateles Falls, New York 13153 (US)
(72) Inventor: De Mers, Robert E., Morristown, NJ New Jersey 07962-2245 (US); Plocher, Tom, Morristown, NJ New Jersey 07962-2245 (US)
(74) Representative: Buckley, Guy Julian

(57) **Abstract**

There is set forth herein a terminal having an input device. The terminal can be hand held. In one embodiment the terminal can be operative for determining a direction of movement of the terminal by processing of signals generated by the input device. The terminal can further be operative for moving a portion of an electronic record displayed on a display of the terminal responsively to the determining of a direction of movement of the terminal.

## Description

### CROSS REFERENCE TO RELATED APPLICATIONS

This application claims priority to U. S. Patent Application No. 13/018,113 filed January 31, 2011 entitled, "Terminal Operative For Display of Electronic Record." The above application is incorporated herein by reference in its entirety.

### FIELD OF THE INVENTION

The present invention relates in general to terminals, and particularly to a terminal having a display.

### BACKGROUND OF THE INVENTION

Hand held terminals, e.g., mobile telephone and mobile data collection terminals are commonly equipped with displays. While there are advantages to making such terminals small in scale, disadvantages can also result from small size. Small mobile terminals have correspondingly small displays. Small displays can be limited with respect to an amount of information that can be displayed thereon. Hand held terminals often comprise a plurality of input output devices. For example, hand held terminals commonly include an image sensor and a display.

### SUMMARY OF THE INVENTION

There is set forth herein a terminal having an input device. The terminal can be hand held. In one embodiment the terminal can be operative for determining a direction of movement of the terminal by processing of signals generated by the input device. The terminal can further be operative for changing a portion of an electronic record displayed on a display of the terminal responsively to the determining of a direction of movement of the terminal.

### BRIEF DESCRIPTION OF THE DRAWINGS

The features described herein can be better understood with reference to the drawings described below. The drawings are not necessarily to scale, emphasis instead generally being placed upon illustrating the principles of the invention. In the drawings, like numerals are used to indicate like parts throughout the various views.

Fig. 1 is a physical form view of a terminal in one embodiment;

Fig. 2 is a block diagram of a terminal in one embodiment shown in a state wherein the terminal displays a portion of an electronic record;

Fig. 3 is an exploded assembly perspective view of an imaging module;

Fig. 4 is a perspective view of an imaging module;

Fig. 5 is a flow diagram illustrating a method which can be performed by a terminal;

Fig. 6 is a timing diagram illustrating a method which can be performed by a terminal;

Fig. 7 is a schematic diagram depicting a set of frames;

Fig. 8 is a schematic diagram depicting a certain frame and a subsequent frame;

Fig. 9 is a diagram illustrating changes in a displayed portion of an electronic record that can be provided responsively to a determining of a direction of movement of a terminal;

Fig. 10 is a perspective physical form view of a terminal having a mouse tracker, wherein Fig. 10 together with Figs. 1 and 9, illustrate a terminal having a housing that defines at terminal front, back, top, and bottom.

### DETAILED DESCRIPTION OF THE INVENTION

There is set forth herein a terminal having an input device. The terminal can be hand held. In one embodiment the terminal can be operative for determining a direction of movement of the terminal by processing of signals generated by the input device. The terminal can further be operative for moving a portion of an electronic record displayed on a display of the terminal responsively to the determining of a direction of movement of the terminal.

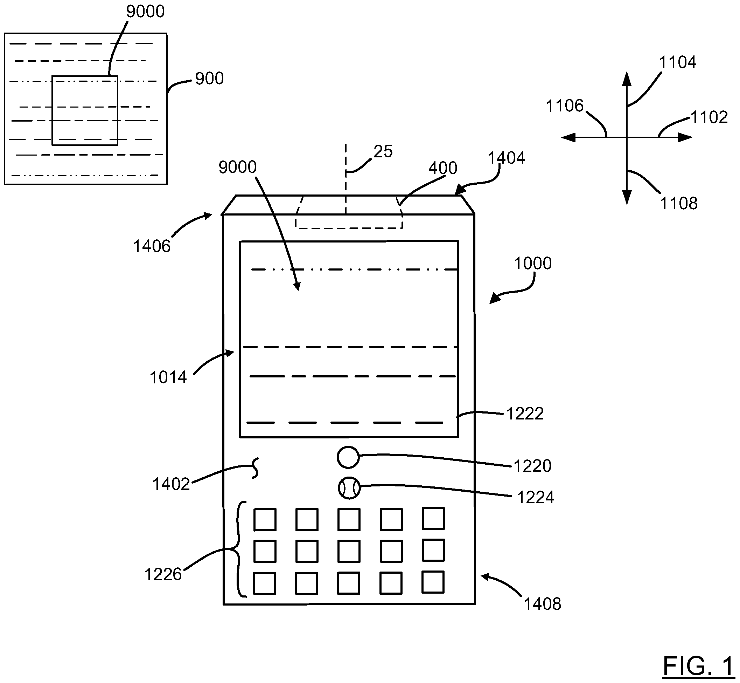

There is shown a terminal 1000 in one embodiment in Fig. 1. Terminal 1000 can be operative so that a displayed portion of a frame of an electronic record displayed display 1222 is responsive to a determined direction of movement of the terminal 1000. Terminal 1000 can be operative to determine the direction of movement of terminal 1000 by processing signals generated by one or more input device of the terminal.

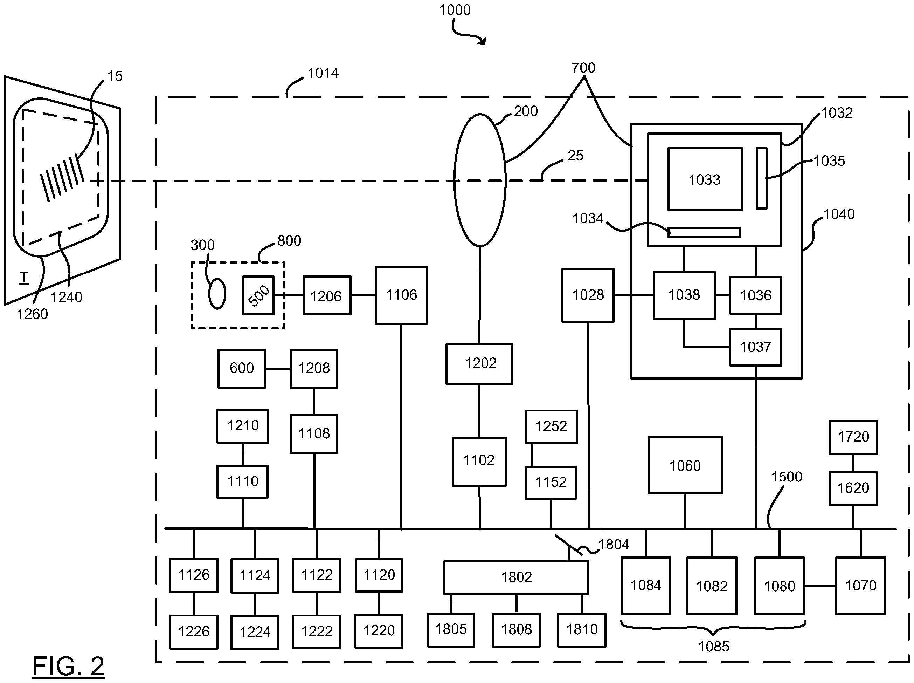

Referring to aspects in terminal 1000 in one embodiment, terminal 1000 can have a housing 1014 which can define a terminal top 1402, bottom 1404, front 1406, back (rear) 1408. An exemplary hardware platform for support of operations described herein with reference to an image sensor based terminal 1000 is shown and described with reference to Fig. 2.

Referring to the block diagram of Fig. 2, terminal 1000 can include an image sensor 1032 comprising a multiple pixel image sensor array 1033 having pixels arranged in rows and columns of pixels, associated column circuitry 1034 and row circuitry 1035. Associated with the image sensor 1032 can be amplifier circuitry 1036 (amplifier), and an analog to digital converter 1037 which converts image information in the form of analog signals read out of image sensor array 1033 into image information in the form of digital signals. Image sensor 1032 can also have an associated timing and control circuit 1038 for use in controlling e.g., the exposure period of image sensor 1032, gain applied to the amplifier 1036. The noted circuit components 1032, 1036, 1037, and 1038 can be packaged into a common image sensor integrated circuit 1040. Image sensor integrated circuit 1040 can incorporate fewer than the noted number of components. In one example, image sensor integrated circuit 1040 can be provided e.g., by an MT9V022 (752x480 pixel array) or an MT9V023 (752x480 pixel array) image sensor integrated circuit available from Micron Technology, Inc. In one example, image sensor array 1033 can be a hybrid monochrome and color image sensor array having a first subset of monochrome pixels without color filter elements and a second subset of color pixels having color sensitive filter elements. In one example, image sensor integrated circuit 1040 can incorporate a Bayer pattern filter, so that defined at the image sensor array 1033 are red pixels at red pixel positions, green pixels at green pixel positions, and blue pixels at blue pixel positions. Frames that are provided utilizing such an image sensor array incorporating a Bayer pattern can include red pixel values at red pixel positions, green pixel values at green pixel positions, and blue pixel values at blue pixel positions. In an embodiment incorporating a Bayer pattern image sensor array, CPU 1060 prior to subjecting a frame to further processing can interpolate pixel values at frame pixel positions intermediate of green pixel positions utilizing green pixel values for development of a monochrome frame of image data. Alternatively, CPU 1060 prior to subjecting a frame for further processing can interpolate pixel values intermediate of red pixel positions utilizing red pixel values for development of a monochrome frame of image data. CPU 1060 can alternatively, prior to subjecting a frame for further processing interpolate pixel values intermediate of blue pixel positions utilizing blue pixel values. An imaging subsystem of terminal 1000 can include image sensor 1032 and a lens assembly 200 for focusing an image onto image sensor array 1033 of image sensor 1032.

In the course of operation of terminal 1000, image signals can be read out of image sensor 1032, converted, and stored into a system memory such as RAM 1080. A memory 1085 of terminal 1000 can include RAM 1080, a nonvolatile memory such as EPROM 1082 and a storage memory device 1084 such as may be provided by a flash memory or a hard drive memory. In one embodiment, terminal 1000 can include CPU 1060 which can be adapted to read out image data stored in memory 1080 and subject such image data to various image processing algorithms. Terminal 1000 can include a direct memory access unit (DMA) 1070 for routing image information read out from image sensor 1032 that has been subject to conversion to RAM 1080. In another embodiment, terminal 1000 can employ a system bus providing for bus arbitration mechanism (e.g., a PCI bus) thus eliminating the need for a central DMA controller. A skilled artisan would appreciate that other embodiments of the system bus architecture and/or direct memory access components providing for efficient data transfer between the image sensor 1032 and RAM 1080 are within the scope and the spirit of the invention.

Referring to further aspects of terminal 1000, imaging lens assembly 200 can be adapted for focusing an image of a decodable indicia 15 located within a field of view 1240 on a substrate, T, onto image sensor array 1033. A size in target space of a field of view 1240 of terminal 1000 can be varied in a number of alternative ways. A size in target space of a field of view 1240 can be varied, e.g., by changing a terminal to target distance, changing an imaging lens assembly setting, changing a number of pixels of image sensor array 1033 that are subject to read out. Imaging light rays can be transmitted about imaging axis 25. Lens assembly 200 can be adapted to be capable of multiple focal lengths and multiple planes of optimum focus (best focus distances).

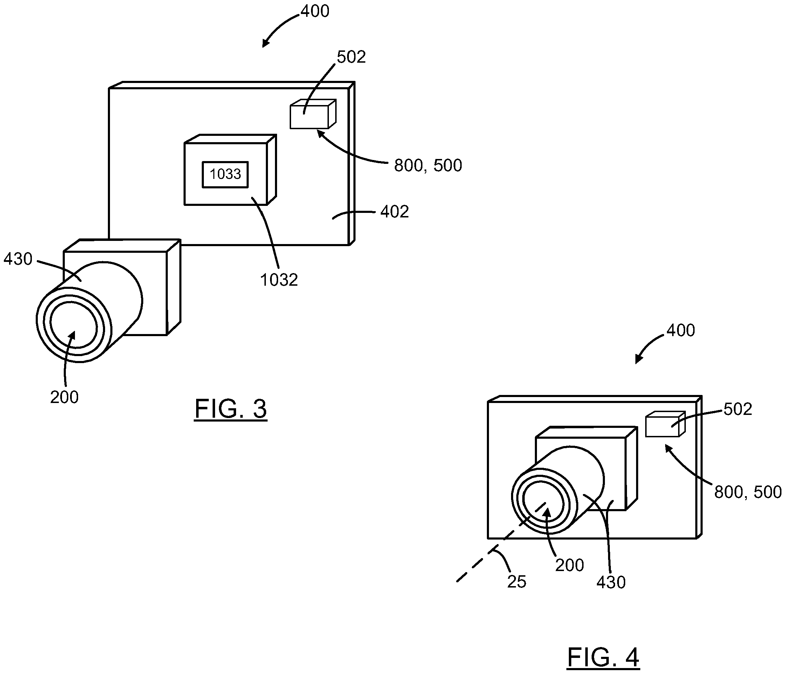

Terminal 1000 can include an illumination subsystem 800 for illumination of target, T, and projection of an illumination pattern 1260. Illumination pattern 1260, in the embodiment shown can be projected to be proximate to but larger than an area defined by field of view 1240, but can also be projected in an area smaller than an area defined by a field of view 1240. Illumination subsystem 800 can include a light source bank 500, comprising one or more light sources. A physical form view of an example of an illumination subsystem is shown in Figs. 3-4. As shown in Figs. 3-4, an imaging module 400 can be provided having a circuit board 402 carrying image sensor 1032 and lens assembly 200 disposed in support 430 disposed on circuit board 402. In the embodiment of Figs. 3 and 4, illumination subsystem 800 has a light source bank 500 provided by single light source 502. In another embodiment, light source bank 500 can be provided by more than one light source. Terminal 1000 can also include an aiming subsystem 600 for projecting an aiming pattern (not shown). Aiming subsystem 600 which can comprise a light source bank can be coupled to aiming light source bank power input unit 1208 for providing electrical power to a light source bank of aiming subsystem 600. Power input unit 1208 can be coupled to system bus 1500 via interface 1108 for communication with CPU 1060.

In one embodiment, illumination subsystem 800 can include, in addition to light source bank 500, an illumination lens assembly 300, as is shown in the embodiment of Fig. 2. In addition to or in place of illumination lens assembly 300 illumination subsystem 800 can include alternative light shaping optics, e.g. one or more diffusers, mirrors and prisms. In use, terminal 1000 can be oriented by an operator with respect to a target, T, (e.g., a piece of paper, a package, another type of substrate) bearing decodable indicia 15 in such manner that illumination pattern 1260 is projected on a decodable indicia 15. In the example of Fig. 2, decodable indicia 15 is provided by a 1D bar code symbol. Decodable indicia 15 could also be provided by a 2D bar code symbol or optical character recognition (OCR) characters. Referring to further aspects of terminal 1000, lens assembly 200 can be controlled with use of electrical power input unit 1202 which provides energy for changing a plane of optimum focus of lens assembly 200. In one embodiment, an electrical power input unit 1202 can operate as a controlled voltage source, and in another embodiment, as a controlled current source. Electrical power input unit 1202 can apply signals for changing optical characteristics of lens assembly 200, e.g., for changing a focal length and/or a best focus distance of (a plane of optimum focus of) lens assembly 200. Light source bank electrical power input unit 1206 can provide energy to light source bank 500. In one embodiment, electrical power input unit 1206 can operate as a controlled voltage source. In another embodiment, electrical power input unit 1206 can operate as a controlled current source. In another embodiment electrical power input unit 1206 can operate as a combined controlled voltage and controlled current source. Electrical power input unit 1206 can change a level of electrical power provided to (energization level of) light source bank 500, e.g., for changing a level of illumination output by light source bank 500 of illumination subsystem 800 for generating illumination pattern 1260.

In another aspect, terminal 1000 can include power supply 1802 that supplies power to a power grid 1804 to which electrical components of terminal 1000 can be connected. Power supply 1802 can be coupled to various power sources, e.g., a battery 1805, a serial interface 1808 (e.g., USB, RS232), and/or AC/DC transformer 1810).

Terminal 1000 can also include a number of peripheral devices including trigger 1220 which may be used to make active a trigger signal for activating frame readout and/or certain decoding processes. Terminal 1000 can be adapted so that activation of trigger 1220 activates a trigger signal and initiates a decode attempt. Specifically, terminal 1000 can be operative so that in response to activation of a trigger signal, a succession of frames can be captured by way of read out of image information from image sensor array 1033 (typically in the form of analog signals) and then storage of the image information after conversion into memory 1080 (which can buffer one or more of the succession of frames at a given time). CPU 1060 can be operative to subject one or more of the succession of frames to a decode attempt.

For attempting to decode a bar code symbol, e.g., a one dimensional bar code symbol, CPU 1060 can process image data of a frame corresponding to a line of pixel positions (e.g., a row, a column, or a diagonal set of pixel positions) to determine a spatial pattern of dark and light cells and can convert each light and dark cell pattern determined into a character or character string via table lookup. Where a decodable indicia representation is a 2D bar code symbology, a decode attempt can comprise the steps of locating a finder pattern using a feature detection algorithm, locating matrix lines intersecting the finder pattern according to a predetermined relationship with the finder pattern, determining a pattern of dark and light cells along the matrix lines, and converting each light pattern into a character or character string via table lookup.

Terminal 1000 can include various interface circuits for coupling various of the peripheral devices to system address/data bus (system bus) 1500, for communication with CPU 1060 also coupled to system bus 1500. Terminal 1000 can include interface circuit 1028 for coupling image sensor timing and control circuit 1038 to system bus 1500, interface circuit 1102 for coupling electrical power input unit 1202 to system bus 1500, interface circuit 1106 for coupling illumination light source bank power input unit 1206 to system bus 1500, and interface circuit 1120 for coupling trigger 1220 to system bus 1500. Terminal 1000 can also include a display 1222 coupled to system bus 1500 and in communication with CPU 1060, via interface 1122, as well as pointer mechanism 1224 in communication with CPU 1060 via interface 1124 connected to system bus 1500. Terminal 1000 can also include range detector unit 1210 coupled to system bus 1500 via interface 1110. In one embodiment, range detector unit 1210 can be an acoustic range detector unit. Various interface circuits of terminal 1000 can share circuit components. For example, a common microcontroller can be established for providing control inputs to both image sensor timing and control circuit 1038 and to power input unit 1206. A common microcontroller providing control inputs to circuit 1038 and to power input unit 1206 can be provided to coordinate timing between image sensor array controls and illumination subsystem controls.

A succession of frames of image data that can be captured and subject to the described processing can be full frames (including pixel values corresponding to each pixel of image sensor array 1033 or a maximum number of pixels read out from image sensor array 1033 during operation of terminal 1000). A succession of frames of image data that can be captured and subject to the described processing can also be "windowed frames" comprising pixel values corresponding to less than a full frame of pixels of image sensor array 1033. A succession of frames of image data that can be captured and subject to the described processing can also comprise a combination of full frames and windowed frames. A full frame can be read out for capture by selectively addressing pixels of image sensor 1032 having image sensor array 1033 corresponding to the full frame. A windowed frame can be read out for capture by selectively addressing pixels of image sensor 1032 having image sensor array 1033 corresponding to the windowed frame. In one embodiment, a number of pixels subject to addressing and read out determine a picture size of a frame. Accordingly, a full frame can be regarded as having a first relatively larger picture size and a windowed frame can be regarded as having a relatively smaller picture size relative to a picture size of a full frame. A picture size of a windowed frame can vary depending on the number of pixels subject to addressing and readout for capture of a windowed frame.

Terminal 1000 can capture frames of image data at a rate known as a frame rate. A typical frame rate is 60 frames per second (FPS) which translates to a frame time (frame period) of 16.6 ms. Another typical frame rate is 30 frames per second (FPS) which translates to a frame time (frame period) of 33.3 ms per frame. A frame rate of terminal 1000 can be increased (and frame time decreased) by decreasing of a frame picture size.

Further aspects of terminal 1000 in one embodiment are described with reference again to Fig. 1. Trigger 1220, display 1222, pointer mechanism 1224, and keyboard 1226 can be disposed on a common side of a hand held housing 1014 as shown in Fig. 1. Display 1222 and pointer mechanism 1224 in combination can be regarded as a user interface of terminal 1000. Display 1222 in one embodiment can incorporate a touch panel for navigation and virtual actuator selection in which case a user interface of terminal 1000 can be provided by display 1222. Shown as being provided discrete hardware elements, trigger 1220, display 1222, pointer mechanism 1224, and keyboard 1226 can be virtual elements displayed on display 1222 and can be actuated with use of a touch panel of display 1222 where display 1222 has an associated touch panel. A user interface of terminal 1000 can also be provided by configuring terminal 1000 to be operative to be reprogrammed by decoding of programming bar code symbols. Imaging module 400 including image sensor array 1033 and imaging lens assembly 200 can be incorporated in hand held housing 1014.

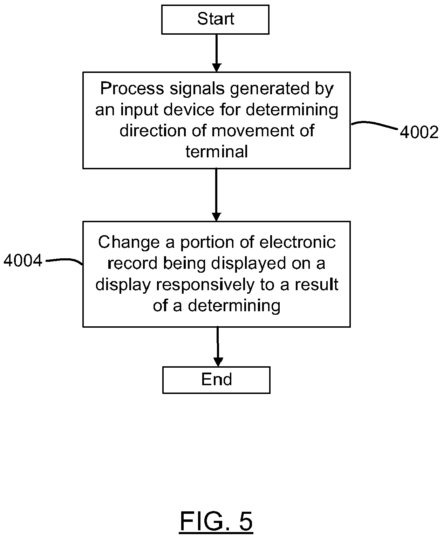

A method which can be performed utilizing terminal 1000 is described with reference to the flow diagram of Fig. 5. At block 4002 terminal 1000 can process signals generated by an input device for determining a direction of movement of terminal 1000. At block 4004 terminal 1000 can change a portion of an electronic record being displayed on a display 1222 of terminal 1000 responsively to a determined direction of movement of the terminal 1000 determined at block 4002. In one embodiment, an input device for generating signals processable for determining a terminal direction can be an image sensor array 1033. In one embodiment, terminal 1000 for processing signals generated by an input device can process frames of image data captured utilizing image sensor array 1033 for determining a direction of movement of terminal 1000.

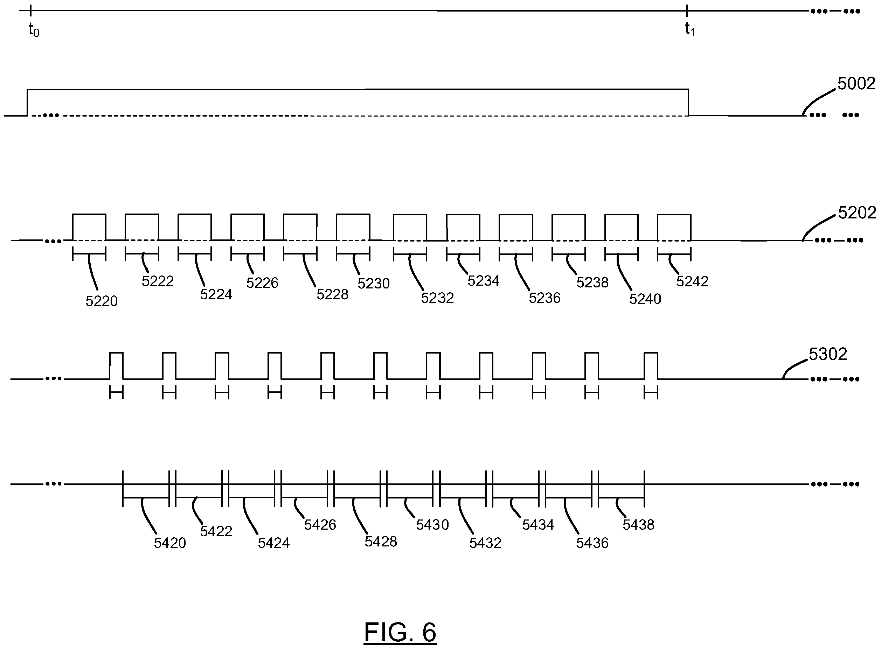

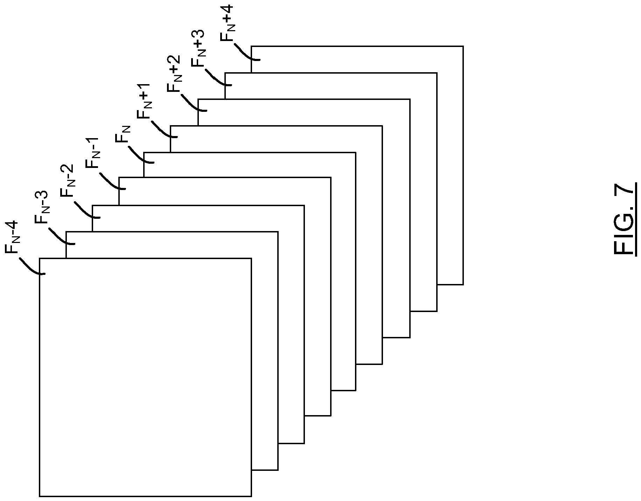

A timing diagram illustrating operation of the terminal 1000 during performance of an exemplary method in accordance with the flow diagram of Fig. 5 is shown in Fig. 6. Referring to the timing diagram of Fig. 6, signal 5002 is a mode activation signal which can be made active, e.g., via actuation of a button of keyboard 1226 or other user actuated input device, e.g., device 1220, 1222, 1224. Mode activation signal 5002 can be made active responsively to various actions that can be initiated by an operator, e.g., action to display an electronic record previously stored in memory 1084 or action to capture a frame of image data utilizing trigger 1220. Signal 5202 is an exposure control signal having active states defining exposure periods and inactive states intermediate exposure periods. Signal 5302 is a readout control signal. When readout control signal 5302 is active, image signals can be read out of image sensor array 1033. Further regarding the timing diagram of Fig. 6, periods 5420-5438 are periods at which CPU 1060 can process frames of image data, e.g., for determining a direction of movement of terminal 1000. in Fig. 7 there is depicted a set (group) of frames. Set of frames F_{N-4}, F_{N-3}, F_{N-2}, F_{N-1}, F_{N}, F_{N+1}, F_{N+2}, F_{N+3}, F_{N+4}, F_{N+5}, can be the frames exposed during respective exposure periods 5220-5238.

Ten (10) frames being indicated in the exemplary embodiment of Fig. 7, CPU 1060 can be operative to process a set of M Frames, M => 2, for determining a direction of movement of terminal 1000. For example, terminal 1000 with imaging axis 25 extending forwardly from terminal 1000 can be moved rightward in a direction of arrow 1102 (Fig. 1) by an operator. Terminal 1000 can be operative to determine a direction of terminal 1000 by processing a set of frames. The processing can comprise determining a "flow" of one or more feature representation between frames.

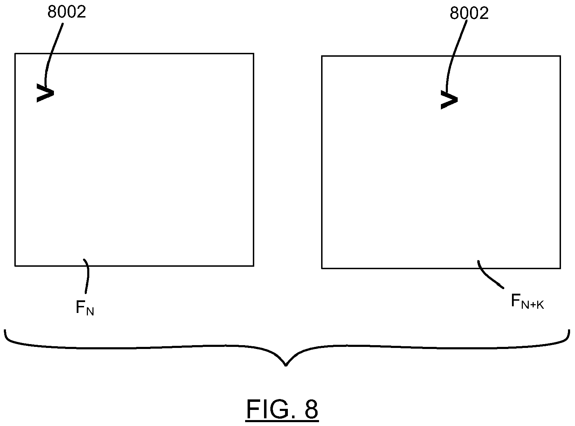

CPU 1060 can be operative to recognize a feature representation included in a frame, e.g., a bright region, a dark region, a corner or an edge. A feature representation 8002 as depicted in Fig. 8, can be expected to move rightward over several frames (compare Frame F_{N} and F_{N+K}) if terminal 1000 is moved leftward (and the case imaging axis 25 is directed forwardly) and can be expected to move leftward over several frames if terminal 1000 is moved rightward over several frames. Accordingly detecting a rightward movement of a feature representation 8002 can result in a determining that a terminal 1000 has been moved leftward. Detecting leftward movement of a feature represent over several frames can result in a determining that a terminal has been moved rightward. A determining that a feature representation 8002 has become larger can result in a determining that a terminal 1000 has been moved along imaging axis 25 in a direction toward a target, T. A determining that a feature representation 8002 has grown smaller can result in a determining that a terminal 1000 has been moved along axis 25 away from a target, T.

Referring now to block 4004, terminal 1000 can be operative to change a portion of a displayed electronic record being displayed on display 1222 responsively to a determined direction of movement of terminal 1000. For example, terminal 1000 can be displaying a portion of an electronic record and responsively to a determination that terminal 1000 has been moved. Terminal 1000 can change a portion of the electronic record being displayed.

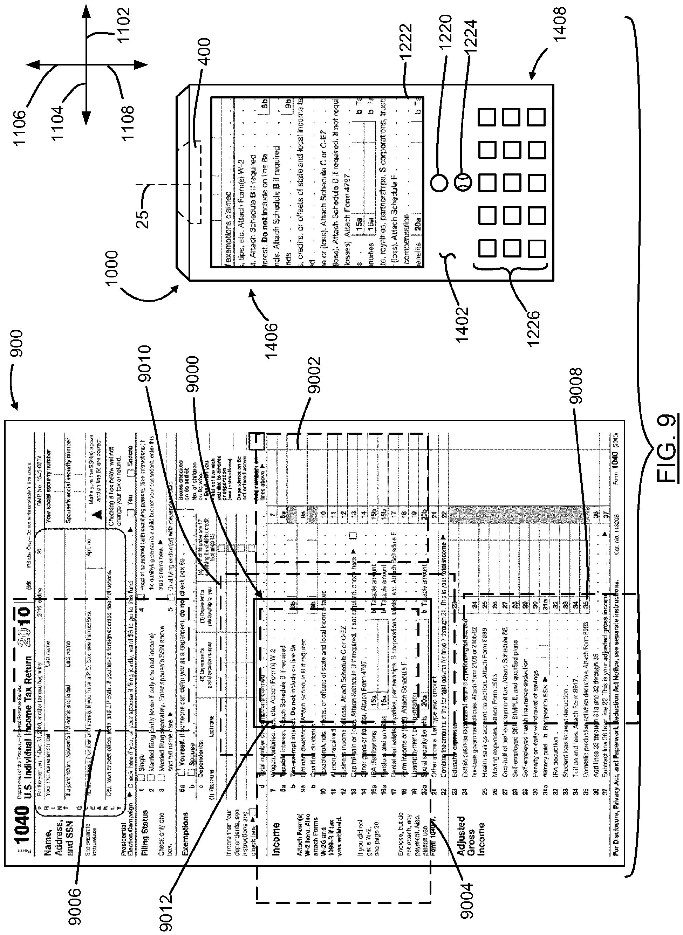

In the example of Fig. 1, imaging axis 25 extends forwardly from terminal 1000. In such an embodiment, a feature representation 8002 increasing in size over a course of frames can result in a determining that the terminal 1000 has been moved forwardly and a feature representation 8002 decreasing in size over a course of frames can result in a determining that the terminal 1000 has been moved rearwardly. Also, in the case of imaging axis 25 extending parallel to a display plane on which display 1222 extends, a determining that a feature representation has moved downwardly over a course of several frames can result in a determining that terminal 1000 has been moved upward and a determining that a feature representation 8002 has moved upward (out of the paper as shown in the view of Figs. 1 and 9) over a course of frames can result in a determining that terminal 1000 has been moved downward (into the paper as shown in the views of Figs. 1 and 9).

Referring to block 4004, terminal 1000 can change a portion of an electronic record being displayed on display 1222 responsively to a result of the terminal 1000 determining a direction of movement of terminal 1000. In one embodiment, terminal 1000 can associate a determined direction of movement of terminal 1000 to changes in a portion of an electronic record being displayed. Table A lists exemplary associations between determined directions of movement of the terminal 1000 and changes in a portion of an electronic record being displayed, which associations can be referenced for determining a change in a portion of an electronic record being displayed.

**TABLE A**

| Determined Direction Of Movement Of Terminal 1000 | Change In Portion Of Electronic Record Being Displayed | Portion Depicted In FIG. 9 |
|---|---|---|
| Rightward | Right | 9002 |
| Leftward | Left | 9004 |
| Forward | Up | 9006 |
| Backward | Down | 9008 |
| Upward | Reverse Zoom | 9010 |
| Downward | Zoom | 9012 |

Fig. 9 shows exemplary portions of an electronic record 900 that can be displayed on display 1222 responsively to a determined movement of an terminal 1000. Portion 9000 can be an originally displayed portion, portion 9002 can be a portion of electronic record 900 displayed responsively to a determining that the terminal 1000 has been moved rightward, portion 9004 can be a portion of electronic record 900 displayed on display 1222 responsively to a determining that the terminal 1000 has been moved leftward, portion 9006 can be a portion of electronic record 900 displayed on display 1222 responsively to a determining that the terminal 1000 has been moved forward, portion 9008 can be a portion of electronic record 900 displayed responsively to a determining that the terminal 1000 has been moved rearward, portion 9010 can be a portion of electronic record 900 displayed responsively to a determining that the terminal 1000 has been moved upward (reverse zooming effect is created), portion 9012 can be a portion of electronic record 900 displayed on display 1222 responsively to a determining that the terminal 1000 has been moved downward (zooming effect). A movement of terminal 1000 can be a manual movement of a terminal caused by an operator grasping the terminal 1000 in a hand and manually moving the terminal 1000. In the embodiment of Fig. 9, terminal 1000 is configured so that imaging axis 25 extends forwardly from terminal 1000 in a direction parallel with a plane on which display 1222 extends (a display plane). In another embodiment, terminal 1000 can be configured so that imaging axis 25 extends in a direction angularly from a display plane. In another embodiment, terminal 1000 can be configured so that imaging axis 25 extends in a direction perpendicular to a display plane in one of a direction upwardly from terminal 1000 or downwardly from terminal 1000.

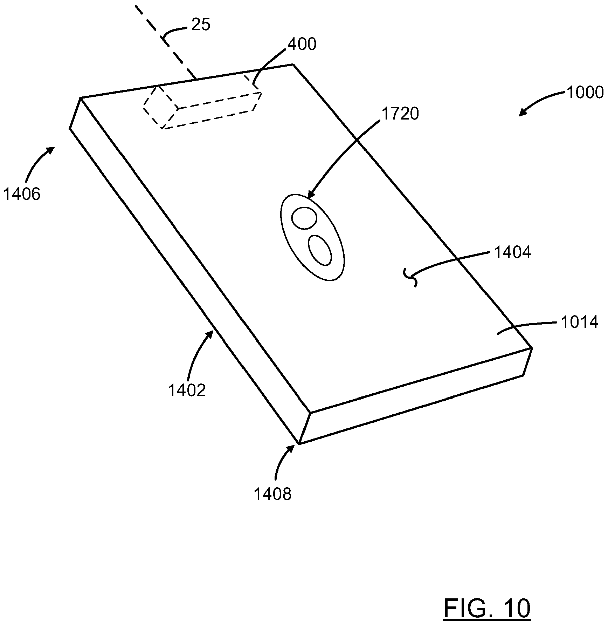

In another aspect, terminal 1000 can include a mouse tracker 1720. Mouse tracker 1720 as shown in Fig. 2, can be coupled to system bus 1500 for communication with CPU 1060 via interface 1620. Like image sensor array 1033, mouse tracker 1720 can be regarded as an input device. Signals generated by mouse tracker 1720 can be processed by CPU 1060 for determining a direction of movement of terminal 1000. In one embodiment, mouse tracker 1720 can be disposed at a bottom of housing 1014 as shown in Fig. 10. Accordingly, when terminal 1000 is rested on a horizontal surface, signals generated by mouse tracker 1720 can be processed for determining a direction of movement of terminal 1000, e.g., right, left, forward, backward. Terminal 1000 can be operative to change a portion of an electronic record being displayed on display 1222. Terminal 1000 can change a portion of an electronic record being displayed on display 1222 in accordance with the associations of Table A. Mouse tracker 1720 can be operative to generate signals indicating contact and lack of contact. A removal of contact can be determined to be an upward movement of terminal 1000. A making of contact can be determined to be a downward movement of terminal 1000. A movement of terminal 1000 can be manual movement of a terminal 1000 caused by an operator grasping the terminal 1000 in a hand and manually moving the terminal 1000.

In one embodiment, terminal 1000 can have image sensor array 1033 and can be devoid of mouse tracker 1720 and can determine a direction of movement of terminal 1000 utilizing signals generated by image sensor array 1033 without utilizing signals generated by mouse tracker 1720. In one embodiment, terminal 1000 can have mouse tracker 1720 and can be devoid of image sensor array 1033 and can determine a direction of movement of terminal 1000 by processing signals generated by mouse tracker 1720 without processing signals generated by image sensor array 1033. In one embodiment, terminal 1000 can have both image sensor array 1033 and mouse tracker 1720 and can determine a direction of movement of terminal 1000 utilizing either or both of signals generated by image sensor array 1033 and mouse tracker 1720, e.g., a direction determining result utilizing signals generated by one of the input devices can be utilized as a check against a direction determining result utilizing signals generated by the other (image sensor array or mouse tracker) input device.

Terminal 1000 can be operative so that when terminal 1000 is being moved in a certain direction, terminal 1000 can change a portion of an electronic record being displayed numerous times during the course of time that the terminal 1000 is moved in the certain direction. The speed with which new portions of an electronic record, e.g., record 900 are displayed can be coordinated to a speed with which a terminal 1000 is moved.

In one example, an electronic record being displayed is an electronic record other than a frame of image data captured utilizing image sensor array 1033, e.g., an electronic record stored in memory 1084 and retrieved for display on display 1222. In some instances, electronic record, e.g., record 900 can be a record transmitted to terminal 1000 from a computer external to terminal 1000. For example, the electronic record can be a spreadsheet in a spreadsheet file format, a formatted character document in a word processing file format, a web page in a web page file format, an image in an image file format.

In one embodiment, an electronic record being displayed on display 1222 can be frame of image data captured utilizing image sensor array 1033. The frame of image data can be a previously captured frame stored in memory 1044 (possibly formatted in an image file format) captured during a previous power up period of terminal 1000 or can be a contemporaneously captured frame captured by terminal 1000 during a current power up period of terminal 1000. In one embodiment, terminal 1000 can be displaying a portion of a contemporaneously captured frame representing at least a portion of a current field of view of imaging assembly 700 and can be operative to change a portion of a contemporaneously captured frame that is displayed on display 1222 responsively to a manual movement of terminal 1000. Thus terminal 1000 can be utilized to zoom a view of a distant image of a target having small features, e.g., small print and can be utilized to scroll a view about the small features.

Among the apparatus and methods set forth herein there is set forth herein:
A1. An terminal comprising:
   an image sensor array and an imaging lens for focusing an image of a target onto the image sensor array, the image sensor array being a two dimensional multiple pixel array having pixels arranged in rows and columns of pixels, the imaging lens and the image sensor array defining an imaging axis;
   a display;
   a hand held housing having disposed therein the image sensor array;
   wherein the terminal is operative for processing frames of image data captured utilizing the image sensor array for determining a direction of movement of the terminal;
   wherein the terminal is further operative for changing a portion of an electronic record being displayed on the display responsively to a result of the determining.
A2. The terminal of A1, wherein the imaging axis extends forwardly from the terminal.
A3. The terminal of A1, wherein the display extends in a display plane, and wherein the imaging axis extends in a direction parallel to the display plane and forwardly from the terminal.
A4. The terminal of A1, wherein the display extends in a display plane, and wherein the imaging axis extends angularly and non-perpendicularly from the display plane.
A5. The terminal of A1, wherein the display extends in a display plane, and wherein the imaging axis extends perpendicularly from the display plane.
A6. The terminal of A1, wherein the processing includes determining a movement of a feature representation over a plurality of frames.
A7. The terminal of A1, wherein the processing includes determining a movement of a feature representation over a plurality of frames, the feature representation being a bright region.
A8. The terminal of A1, wherein the processing includes determining a movement of a feature representation over a plurality of frames, the feature representation being a dark region.
A9. The terminal of A1, wherein the processing includes determining a movement of a feature representation over a plurality of frames, the feature representation being a representation of a corner.
A10. The terminal of A1, wherein the processing includes determining a movement of a feature representation over a plurality of frames, the feature representation being a representation of an edge.
A11. The terminal of A1, wherein the terminal is operative for changing a portion of the electronic record being displayed by zooming a portion of the electronic record being displayed.
A12. The terminal of A1, wherein the terminal is operative for changing a portion of the electronic record being displayed by performing any one of the following: moving a portion of the electronic representation being displayed leftward, moving a portion of the electronic representation being displayed rightward, moving a portion of the electronic representation being displayed upward, moving a portion of the electronic representation being displayed downward, zooming a portion of the electronic record being displayed, and reverse zooming a portion of the electronic representation being displayed.
B1. A terminal comprising:
   a hand held housing;
   a display disposed on the housing, wherein the terminal is operative for displaying a portion of an electronic record on the display;
   an input device for generating signals processable for determining a direction of movement of the terminal;
   wherein the terminal is operative for processing signals generated by the input device for determining a direction of movement of the terminal;
   wherein the terminal is further operative for changing a portion of an electronic record being displayed responsively to a result of the determining.
B2. The terminal of B1, wherein the housing has a top and a bottom wherein the display is disposed at the top of the housing and wherein the input device is a mouse tracker disposed on a bottom of the housing.
B3. The terminal of B1, wherein the input device is an image sensor array.
B4. The terminal of B1, wherein the terminal includes an image sensor array and a mouse tracker, wherein the terminal is operative to determine a direction of the terminal by processing signals generated by the mouse tracker, the terminal further being operative to determine a direction of the terminal by processing signals generated the image sensor array.

While the present invention has been described with reference to a number of specific embodiments, it will be understood that the true spirit and scope of the invention should be determined only with respect to claims that can be supported by the present specification. Further, while in numerous cases herein wherein systems and apparatuses and methods are described as having a certain number of elements it will be understood that such systems, apparatuses and methods can be practiced with fewer than or greater than the mentioned certain number of elements. Also, while a number of particular embodiments have been described, it will be understood that features and aspects that have been described with reference to each particular embodiment can be used with each remaining particularly described embodiment.

## Claims

1. An terminal comprising:
an image sensor array and an imaging lens for focusing an image of a target onto the image sensor array, the image sensor array being a two dimensional multiple pixel array having pixels arranged in rows and columns of pixels, the imaging lens and the image sensor array defining an imaging axis;
a display;
a hand held housing having disposed therein the image sensor array;
wherein the terminal is operative to process frames of image data captured utilizing the image sensor array for determining a direction of movement of the terminal;
wherein the terminal is further operative for changing a portion of an electronic record being displayed on the display responsively to a result of the determining.

2. The terminal of claim 1, wherein the imaging axis extends forwardly from the terminal.

3. The terminal of claim 1, wherein the display extends in a display plane, and wherein the imaging axis extends in a direction parallel to the display plane and forwardly from the terminal.

4. The terminal of claim 1, wherein the display extends in a display plane, and wherein the imaging axis extends perpendicularly from the display plane.

5. The terminal of claim 1, wherein the processing includes determining a movement of a feature representation over a plurality of frames.

6. The terminal of claim 1, wherein the processing includes determining a movement of a feature representation over a plurality of frames, the feature representation being a bright region.

7. The terminal of claim 1, wherein the processing includes determining a movement of a feature representation over a plurality of frames, the feature representation being a dark region.

8. The terminal of claim 1, wherein the processing includes determining a movement of a feature representation over a plurality of frames, the feature representation being a representation of a corner.

9. The terminal of claim 1, wherein the processing includes determining a movement of a feature representation over a plurality of frames, the feature representation being a representation of an edge.

10. The terminal of claim 1, wherein the terminal is operative for changing a portion of the electronic record being displayed by zooming a portion of the electronic record being displayed.

11. The terminal of claim 1, wherein the terminal is operative for changing a portion of the electronic record being displayed by performing any one of the following: moving a portion of the electronic representation being displayed leftward, moving a portion of the electronic representation being displayed rightward, moving a portion of the electronic representation being displayed upward, moving a portion of the electronic representation being displayed downward, zooming a portion of the electronic record being displayed, and reverse zooming a portion of the electronic representation being displayed.

12. A terminal comprising:
a hand held housing;
a display disposed on the housing, wherein the terminal is operative for displaying a portion of an electronic record on the display;
an input device for generating signals processable for determining a direction of movement of the terminal;
wherein the terminal is operative for processing signals generated by the input device for determining a direction of movement of the terminal;
wherein the terminal is further operative for changing a portion of an electronic record being displayed responsively to a result of the determining.

13. The terminal of claim 12, wherein the housing has a top and a bottom wherein the display is disposed at the top of the housing and wherein the input device is a mouse tracker disposed on a bottom of the housing.

14. The terminal of claim 12, wherein the input device is an image sensor array.

15. The terminal of claim 12, wherein the terminal includes an image sensor array and a mouse tracker, wherein the terminal is operative to determine a direction of the terminal by processing signals generated by the mouse tracker, the terminal further being operative to determine a direction of the terminal by processing signals generated the image sensor array.
